# EUROPEAN PATENT SPECIFICATION

(11) **EP 3 709 235 B1**
(45) Date of publication and mention of the grant of the patent: **09.07.2025**
(21) Application number: 20161280.1
(22) Date of filing: 05.03.2020
(51) Int. Cl.: G06Q 10/06

(54) **COLLABORATIVE TASK EXECUTION BY A ROBOTIC GROUP USING A DISTRIBUTED SEMANTIC KNOWLEDGE BASE**
KOLLABORATIVE AUFGABENAUSFÜHRUNG DURCH EINE ROBOTERGRUPPE UNTER VERWENDUNG EINER VERTEILTEN SEMANTISCHEN WISSENSBASIS
EXÉCUTION COLLABORATIVE DE TÂCHES PAR UN GROUPE ROBOTIQUE À L'AIDE D'UNE BASE DE CONNAISSANCES SÉMANTIQUES DISTRIBUÉE

(30) Priority: 08.03.2019 IN 201921009192
(43) Date of publication of application: 16.09.2020
(73) Proprietor: Tata Consultancy Services Limited, Maharashtra (IN)
(72) Inventor: DEY, Sounak, 700160 Kolkata - West Bengal (IN); CHOUDHURY, Soumyadeep, 700160 Kolkata, West Bengal (IN); MUKHERJEE, Arijit, 700160 Kolkata, West Bengal (IN)
(74) Representative: Goddar, Heinz J.

(56) References cited:
- US-A1- 2004 024 490
- US-A1- 2019 049 975
- DEY SOUNAK ET AL: "Semantic data exchange between collaborative robots in fog environment: Can CoAP be a choice?", 2017 GLOBAL INTERNET OF THINGS SUMMIT (GIOTS), IEEE, 6 June 2017 (2017-06-06), pages 1 - 6, XP033145199, DOI: 10.1109/GIOTS.2017.8016232
- AUTEFAGE VINCENT ET AL: "Distributed collaborative system for heterogeneous swarms of autonomous mobile robots", 2015 INTERNATIONAL CONFERENCE ON PROTOCOL ENGINEERING (ICPE) AND INTERNATIONAL CONFERENCE ON NEW TECHNOLOGIES OF DISTRIBUTED SYSTEMS (NTDS), IEEE, 22 July 2015 (2015-07-22), pages 1 - 7, XP032791589, DOI: 10.1109/NOTERE.2015.7293473
- KASPERSKI SEBASTIAN ET AL: "Evaluation of cooperative exploration strategies using full system simulation", 2013 16TH INTERNATIONAL CONFERENCE ON ADVANCED ROBOTICS (ICAR), IEEE, 25 November 2013 (2013-11-25), pages 1 - 6, XP032579286, DOI: 10.1109/ICAR.2013.6766457
- ANDRE TORSTEN ET AL: "Coordinated multi-robot exploration: Out of the box packages for ROS", 2014 IEEE GLOBECOM WORKSHOPS (GC WKSHPS), IEEE, 8 December 2014 (2014-12-08), pages 1457 - 1462, XP032747953, DOI: 10.1109/GLOCOMW.2014.7063639

## Description

### CROSS-REFERENCE TO RELATED APPLICATIONS AND PRIORITY

The present application claims priority from India Patent Application No. 201921009192, filed before Indian Patent Office on March 8, 2019.

### TECHNICAL FIELD

The disclosure herein generally relates to robotics, and, more particularly, to collaborated task execution by a group of robots using a distributed semantic knowledge base.

### BACKGROUND

With advancements in the fields of robotics and automation, robots are widely used so as to handle different types of tasks, related to a variety of applications. For example, robots are used for handling inventory management, for diffusing bomb, for automated surveillance and so on. In all such automated applications, the robots are required to collect certain data with respect to various aspects of a task assigned to the robots, so as to plan and execute the task.

In majority of the existing systems, a centralized database is used, which serves data to the robots. In a bandwidth constrained scenario, connection between the robots and the centralized database may not be stable. If the robot does not get necessary data from the centralized database, which may be hosted on a cloud, then task execution being performed by the robot may be affected. Document (US 2019/049975 A1) discloses autonomous devices, and more particularly to method and system to optimally allocate warehouse procurement tasks to distributed autonomous devices. The method includes obtaining, at a coordinating agent, a global task associated with the warehouse and information associated with the robotic agents. The information includes a count and status of the robotic agents. The global task is profiled to obtain a set of sub-tasks and constraints associated with the set of sub-tasks are identified. The constraints include utilization constraint and/or pricing constraints. A distributed, decentralized optimal task allocation is performed amongst the robotic agents based on constraints to obtain optimal performance of robotic agents. The distributed optimal task allocation includes performing primal or dual decomposition of the set of sub-tasks by each robotic agent and updating corresponding primal/dual variables by the coordinating agent when the optimization is performed based on utilization constraint and pricing constraints, respectively (Abstract).

### SUMMARY

Embodiments of the present disclosure present technological improvements as solutions to one or more of the above-mentioned technical problems recognized by the inventors in conventional systems. For example, in one embodiment, a processor-implemented method for robotic task execution is provided as claimed in claim 1.

In another aspect, a robotic group for task execution is provided as defined claim 3.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a block diagram illustrating an exemplary robotic group with a distributed semantic knowledge base for task execution, according to some embodiments of the present disclosure.
FIG. 2 is a block diagram depicting components of a robot which is part of the robotic group, according to some embodiments of the present disclosure.
FIG. 3 is a flow diagram depicting steps involved in the process of performing task execution using the distributed semantic knowledge base, by the robotic group of FIG. 1, in accordance with some embodiments of the present disclosure.
FIG. 4 is a flow diagram depicting steps involved in the process of identifying at least one robot from the robotic group as a target robot for task execution, by the robotic group of FIG. 1, in accordance with some embodiments of the present disclosure.
FIGS. 5a and 5b illustrate an example structure of the distributed semantic knowledge base and mechanism of the robots in the robotic group querying each other, in accordance with some embodiments of the present disclosure.
FIGS. 6a through 6e are example graphs indicating values of different parameters indicating advantage of the distributed knowledge base over a centralized knowledge base, in an experimental setup, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

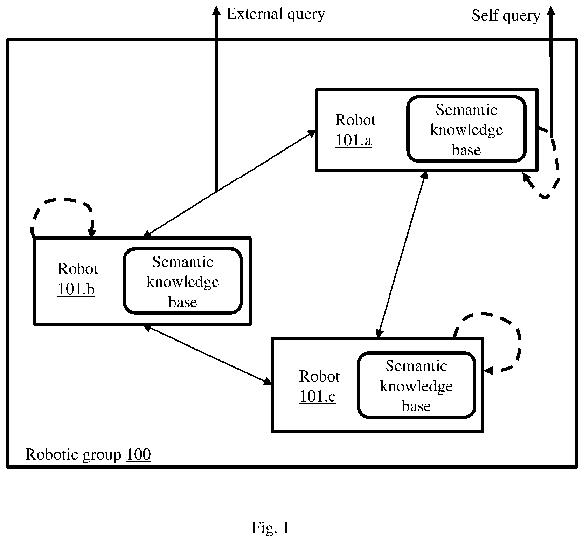

Referring now to the drawings, and more particularly to FIG. 1 through FIG. 6e, where similar reference characters denote corresponding features consistently throughout the figures, there are shown preferred embodiments and these embodiments are described in the context of the following exemplary system and/or method.

FIG. 1 is a block diagram illustrating an exemplary robotic group with a distributed semantic knowledge base for task execution, according to some embodiments of the present disclosure. The robotic group 100 includes a plurality of robots 101 (one of the plurality of robots 101 is also referred to as a 'first robot' for the purpose of explaining capabilities/functionalities of the robot 101) collaborating for executing one or more tasks being assigned to the robotic group 100. FIG. 1 depicts the robotic group 100 including four robots 101 (101. a through 101.d). However any number of robots 101 can be used to form the robotic group 100, and FIG. 1 does not intent to any restriction on the number of robots 101 that form the robotic group 100.

For executing any task, the robots 101 in the robotic system 100 require certain information, termed as 'task specific parameters'. For example, consider that the task being assigned to the robotic group is picking up an object. The task specific parameters corresponding to the task of picking up the object may include object specific data (object name, object type, object size, object shape, object color, object weight and so on), location specific data (rack number, aisle number, aisle width, robots located closer to the object and so on), capability specific data (capabilities required by a robot to execute the task such as but not limited to presence of a gripper/suction cup, and capability to lifting object with certain weight).

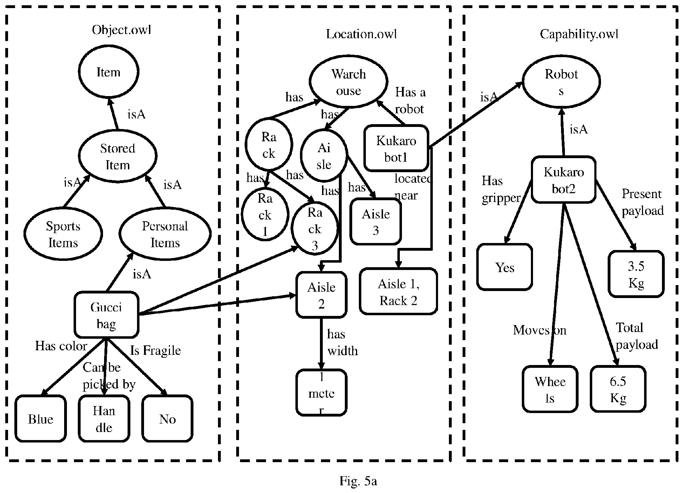

In the distributed semantic knowledge base being used by the robotic group 100, semantic information pertaining to the task specific parameters is distributed among the robots 101 that form the robotic group, such that an object database storing the object specific data is stored in one robot (for example, in robot 101. a), a location database storing the location specific data is stored in another robot (for example, in robot 101. b), and a capability database storing the required capabilities is stored in another robot (for example, in robot 101. c). When the task is fetched by the robotic group 100, each robot 101 separately processes the task, during which each robot 101 initially identifies the plurality of task specific parameters corresponding to the fetched task that are required to execute the fetched task. Consider that the task specific parameters are related to object, location, and capabilities. An example structure of the distributed semantic knowledge base is given in FIG. 5a. As can be seen in FIG. 5a, various information pertaining to the object, location, and capabilities are stored in the databases object.owl, location.owl, and capability.owl respectively, in a structured manner. Each robot 101 in the robotic group 100 maintains in an associated database, information pertaining to database maintained by each robot 101 in the robotic group 100. For example, the database specifies that the object database is maintained by robot 101.a, the location database is maintained by robot 101.b, and that the capability database is maintained by the robot 101.c.

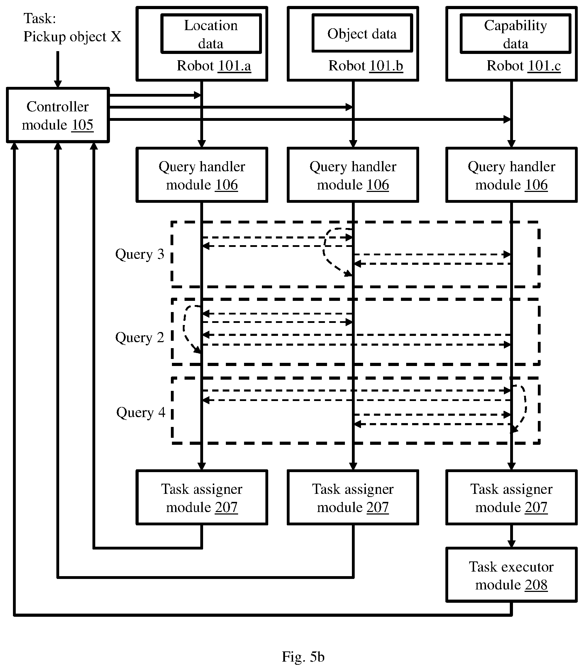

Each robot 101 in the robotic group 100 processes the fetched task. During the processing of the task, each robot triggers a self query and multiple external queries to gather semantic information pertaining to the task specific parameters. The self query is triggered by the robot 101 to gather/collect the semantic information from own semantic knowledge base. For example, as the object database is maintained by the robot 101.a, the robot 101.a triggers the self query to gather the semantic information pertaining to object related task specific parameters. At the same time, the robots 101.b and 101.c triggers separate external queries to the robot 101.a so as to gather the semantic information pertaining to object related task specific parameters. Similarly each of the robots 101 triggers the self query or the external query to gather the semantic information pertaining to the location, and the capabilities. This mechanism is depicted in FIG. 5b. By triggering the self query and the external queries, each robot 101 gathers the semantic information pertaining to all of the task specific parameters.

Each robot 101 then processes the gathered semantic information to identify at least one of the robots 101 as a target robot for executing the at least one task. **In** various embodiments, the robot 101 is identified as the target robot based on at least two conditions, a) capabilities to execute the at least one task, b) cost factor involved in using/employing the robot for task execution. A robot 101 requires some specific capabilities so as to execute a task. The capabilities required can vary from one task to another. The capabilities required for executing the at least one task maybe pre-configured or dynamically configured with memory module(s) 101 of each robot 101 in the robotic group 100. Each robot 101 may compare the capability requirements of the at least one task with the capabilities of each of the robots 101, and identify at least one of the robots 101 as having the matching/required capabilities. After identifying the one or more robots 101 with the required capabilities, the corresponding cost factor is calculated for each of the robots 101 having the matching/required capabilities. The cost factor is calculated for a robot-task pair, and represents cost incurred in using/deploying the robot 101 for executing the task. The cost factor of each of the robots 101 for the task is calculated based on a plurality of parameters such as but not limited to type of task, type of object involved in the task, type of action to be performed on the object, type of material the object is made of, distance between location of the robot and location of the object, and battery consumption. Any suitable calculation mechanism can be used by the robots 101 to calculate the cost factor. A higher cost factor value for a robot 101 indicates that cost involved in deploying that particular robot 101 is comparatively high (in comparison with that of the other robots 101 in the robotic group 100 identified as having the matching/required capabilities). **In** the same manner, a lower cost factor value for a robot 101 indicates that cost involved in deploying that particular robot 101 is comparatively low (in comparison with that of the other robots 101 in the robotic group 100 identified as having the matching/required capabilities).

The robot(s) 101 identified as the target robot(s) then executes the at least one task assigned to the robotic group. The target robot(s) may be equipped with necessary software and/or hardware means that amount to the necessary capabilities to execute the at least one task. During the task execution phase, the target robot may use any suitable mechanism/approach for planning path for the target robot to reach at least one location so as to execute the at least one task.

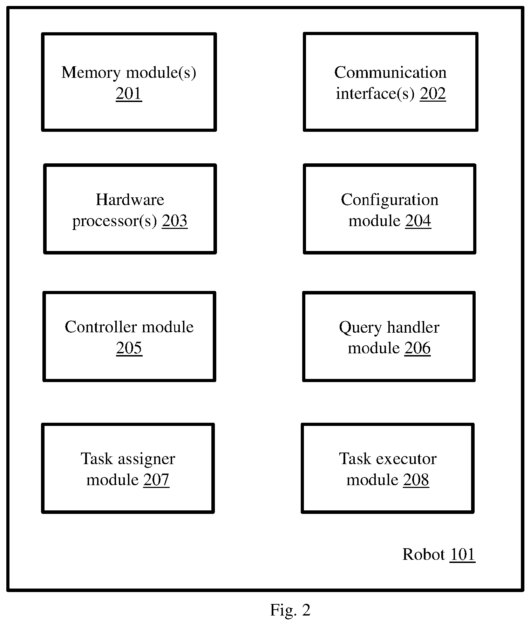

FIG. 2 is a block diagram depicting components of a robot which is part of the robotic group, according to some embodiments of the present disclosure. Each robot 101 in the robotic group 100 includes at least one memory module 201, at least one communication interface 202, one or more hardware processors 203, a configuration module 204, a controller module 205, a query handler module 206, a task assigner module 207, and a task executor module 208.

The at least one memory module 201 is operatively coupled to the one or more hardware processors 203. The one or more hardware processors 203 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The communication interface 202 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory module(s) 201 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the robot 101 can be stored in the memory module(s) 201. The memory module 201 is further configured to store semantic information pertaining to one or more task specific parameters, such that semantic knowledge base storing the task specific information required for executing one or more tasks is distributed between memory modules 201 of different robots 101 that form the robotic group. In an embodiment, contents of the semantic knowledge base is updated dynamically, based on real-time information collected by at least one robot 101 in the robotic group 100.

The configuration module 204 initializes the robot 101 whenever a new task is assigned to the robotic group 100. During this process, the configuration module 204 may read data such as but not limited to network ip, file paths, and initial location of the robot 101 in a map, from a configuration file.

The controller module 205 is configured to communicate with rest of the modules of the robot 101, and synchronizes and coordinates communication between the modules, during various stages of the task execution being carried out by the robotic group 100. The controller module 205 may be configured to collect new tasks being assigned to the robotic group 100 and extract, by processing the collected new task, unknown parameters in the task (wherein the unknown parameters refer to the task specific parameters which are unknown to the robot the controller module 205 is a part of). The controller module 205 then informs the query handler module 206 to raise required queries. The controller module 205 can be further configured to collect responses from the query handler module 206 and inform the task executor module 208 execute the task(s).

The query handler module 206 is configured to trigger the self query and the external queries, so as to gather/collect semantic information regarding the task specific parameters.

The task assigner module 207 is configured to identify at least one target robot, based on the capabilities of the robot and the cost factor information. The task assigner module 207 is configured to calculate the cost factor for each robot-task pair.

The task executor module 208 is configured to execute the at least one task assigned to the robotic group 100, based on the semantic information collected by the query handler module 206, using the target robot having appropriate software and hardware capabilities.

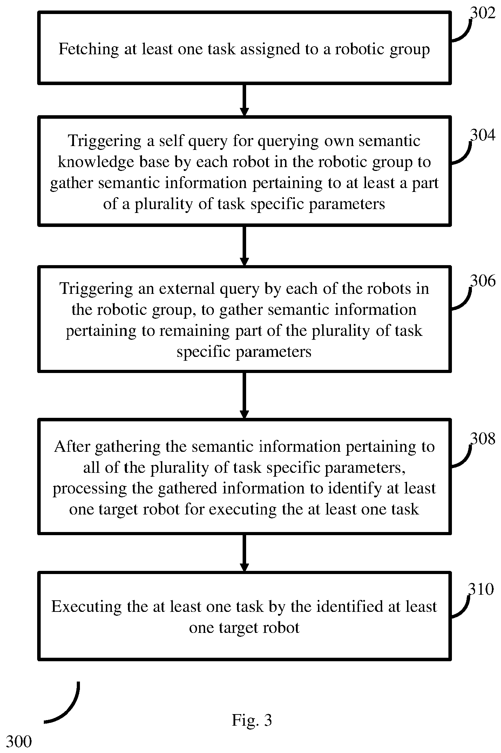

FIG. 3 is a flow diagram depicting steps involved in the process of performing task execution using the distributed semantic knowledge base, by the robotic group of FIG. 1, in accordance with some embodiments of the present disclosure. In this method, the robotic group 100 fetches (302) at least one task being assigned to the robotic group 100. Each robot 101 in the robotic group 100 triggers (304 & 306) a self query or one or more external queries to gather semantic information on various task specific parameters as elaborated with the description of FIG. 1. After gathering the semantic information pertaining to the plurality of task specific parameters, each robot 101 processes (308) the gathered information to identify at least one of the robots 101 as target robot(s). Further, the at least one task assigned to the robotic group 100 is executed by the one or more target robots.

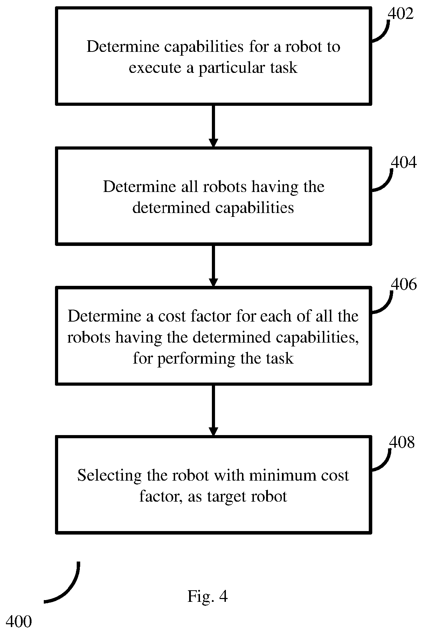

FIG. 4 is a flow diagram depicting steps involved in the process of identifying at least one robot from the robotic group as a target robot for task execution, by the robotic group of FIG. 1, in accordance with some embodiments of the present disclosure. So as to identify the target robot(s), each robot 101 in the robotic group 100 processes the gathered semantic information, and identifies (402) robotic capabilities required to execute the at least one task. Then each robot 101 determines (404) all robots having the determined capabilities. For each of the robots 101 identified as having the determined capabilities, each robot 101 determines (406) a cost factor, and selects (408) one robot with minimum cost factor of all the robots 101 identified as having the determined capabilities, as the target robot.

### Example of collecting semantic data pertaining to task specific parameters:

An example of the robots 101 triggering the self query and the external queries for collecting the semantic information pertaining to the task specific parameters is explained by referring to FIG. 5a and FIG. 5b. Consider that the task being assigned to the robotic group 100 comprising three robots 101.a, 101.b, and 101.c is picking up an object X (which is a Gucci bag in this example). In this scenario, for the robots 101.a, 101.b, and 101.c to execute the task (i.e. picking up of the Gucci bag), data pertaining to object, location, and capabilities are the task specific parameters required. A semantic knowledge base (object.owl) that stores semantic information pertaining to objects is stored in the robot 101a, a semantic knowledge base (location.owl) that stores semantic information pertaining to location is stored in the robot 101.b, a semantic knowledge base (capabilities.owl) that stores semantic information pertaining to capabilities is stored in the robot 101.c. Different steps in gathering the semantic information are given below:
Step 1: The task 'pick up the Gucci bag' is processed by controller module 205 of each of the robots 101.a, 101.b, and 101.c. The controller module 205 of each of the robots 101 sends instruction for triggering queries to corresponding query handler modules 206. At step 1 queries triggered are to check whether information pertaining to one or more objects associated with the assigned task exists in the database object.owl. Hence the query handler module 206 of robot 101.b triggers a self query and the robots 101.a and 101.c trigger one or more external queries. If the queries triggered at step 1 do not yield any results, that means no information pertaining to the one or more objects exist in the object.owl database, and in that case the robots 101.a, 101.b, and 101.c skip the assigned task, and may pick up next task in pipeline if any. If the object specific data is obtained in step 1, then step 2 is executed.
Step 2: In step 2, each of the robots 101.a, 101.b, and 101.c triggers queries to collect semantic information pertaining to location. The robot 101.a maintains the database location.owl. Hence the query handler module 206 of robot 101.a triggers a self query to gather/collect the semantic information pertaining to the one or more objects, whereas the robots 101.b and 101.c trigger one or more external queries (to the robot 101.a) to gather the semantic information pertaining to the one or more objects. The location data may be obtained in the form of coordinates.
Step 3: Consider that in step 1 queries triggered are to collect information pertaining to one or more objects in the task assigned. The robot 101.b maintains the database object.owl. Hence the query handler module 206 of robot 101.b triggers a self query to gather/collect the semantic information pertaining to the one or more objects, whereas the robots 101.a and 101.c trigger one or more external queries (to the robot 101.b) to gather the semantic information pertaining to the one or more objects. In this step, information such as but not limited to size of the object, how to pick up the object, shape of the object, and fragile or not, pertaining to the one or more objects are collected.
Step 4: In step 4, each of the robots 101.a, 101.b, and 101.c triggers queries to collect semantic information pertaining to capabilities i.e. capabilities required to execute the one or more tasks so as to identify a target robot for executing the assigned task. The robot 101.c maintains the database capability.owl. Hence the query handler module 206 of robot 101.c triggers a self query to gather/collect the semantic information pertaining to the one or more capabilities, whereas the robots 101.a and 101.b trigger one or more external queries (to the robot 101.c) to gather the semantic information pertaining to the one or more capabilities.

### Experimental data:

The experimental set up described herein intent to compare performance of the distributed semantic knowledge base against a centralized semantic knowledge base. The experimental set up was designed in the following fashion:
- Three groups of robots (R₁, R₂, R₃) are taken comprising of 3, 6 and 9 robots respectively.
- Five task-groups (T₁, T₂, T₃, T₄, T₅) have been created comprising of 5, 10, 20, 40 and 80 tasks of picking objects respectively.
- Each group of robots has performed the tasks in all task groups i.e. each Rᵢ, i ε {1, 2, 3} has performed Tⱼ, j ε {1, 2, 3, 4, 5}.
- Each {Rᵢ, Tⱼ} pair has been tested for four different network bandwidths Bₖ, k ε {1, 2, 3, 4} having values 35 kbps, 128 kbps, 256 kbps, 512 kbps respectively.
- Each of {Rᵢ, Tⱼ, Bₖ} has been tested under different network loss condition Lₚ, p ε {1, 2, 3, 4, 5} having values 2%, 5%, 10%, 15%, 20% respectively.

All these tests, as stated above, have been executed with all the varying parameters again with the whole knowledge base being stored in one remote cloud.

A comparison between distributed and centralized version is recorded in terms of time to complete the task and total bytes exchanged over the network.

The test was carried out to evaluate performance especially under poor bandwidth conditions. Hence, the network bandwidths were chosen to be in range of cellular network bandwidths such as GPRS (35KBps), EDGE (135KBps), and so on to ensure poor network conditions. Some of the assumptions made during the experiment are:
- Tasks are sequentially triggered into the robotic group from an external source.
- Each robot in the robotic network knows what knowledge base is present with each other robot in the robotic group.

### Experimental Setup:

The experiment was carried out using 3 custom made R-Pi robots with 1 GB RAM each, in a 5 task scenario. However at a later stage, so as to test performance with more than 3 robots, more robots were simulated using Virtual Machines (VM), each having only 900 MB of RAM. These VMs, representing the actual robots, communicate with each other via an internal network. NetEm utility has been used for configuring different bandwidth and loss condition of this network. Wireshark is used to capture network traffic and latency. Each VM has a running instance of robotic agent and they communicate with each other via client/server mode.

### Experimental Results:

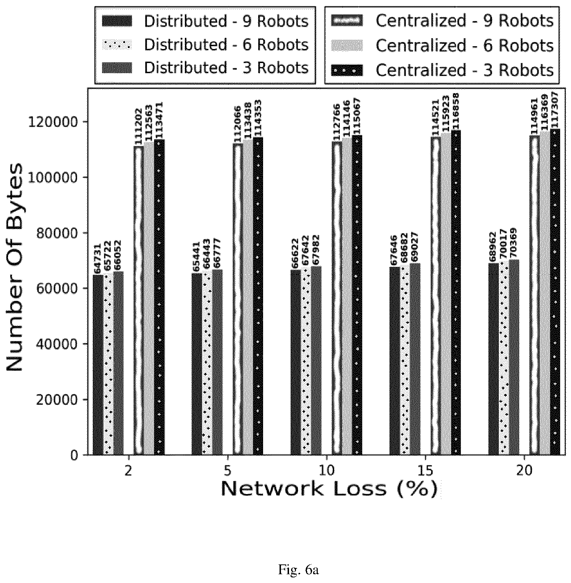

During this experiment, performance of the centralized and the distributed systems was compared in terms of total no. of exchanged bytes at 35 Kbps bandwidth and for 5 tasks. The network loss (in %) has been varied and the no. of exchanged bytes over network is recorded for 3, 6 and 9 robots. The results obtained indicate that the network traffic (i.e. bytes exchanged) for distributed system is nearly 42% less than that of the centralized system for 2% network loss, and it does not change much even if the loss increases to 20%. Thus, the distributed system has an advantage. Similar behaviour is observed for other bandwidths also. This is depicted in FIG. 6a.

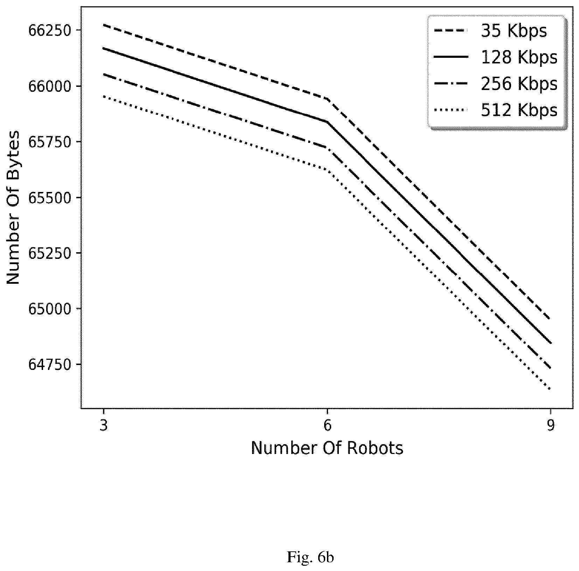

Further, it has been observed from the results that for 35 Kbps scenario if the no. of robots increases (from 3 to 6 to 9) then the network traffic decreases approximately by 1% in each case. This is depicted in FIG. 6b. The same behaviour was observed for all the other network bandwidths, i.e if the team size (i.e. number of robots) increases then network traffic decreases, keeping the no. of tasks and network loss unchanged.

In the experimental setup, the N tasks were not sequentially pushed to the group of robots; instead the N tasks were divided into two equal sets (in case of 6 robots) or into three equal sets (in case of 9 robots) and pushed each such task-set to a cluster of 3 robots for parallel processing. Thus in 9-robots case, N tasks are processed in parallel by 3 clusters of robots so that each cluster processes N/3 tasks effectively, while in 6-robots case, each cluster processes N/2 tasks and in 3-robots case, one single cluster processes all N tasks. As no. of bytes exchanged is directly proportional to the no. of queries made by robots, which is again proportional to the no. of tasks that a robot handles, a slight increase in network traffic with decrease in the no. of robots was observed.

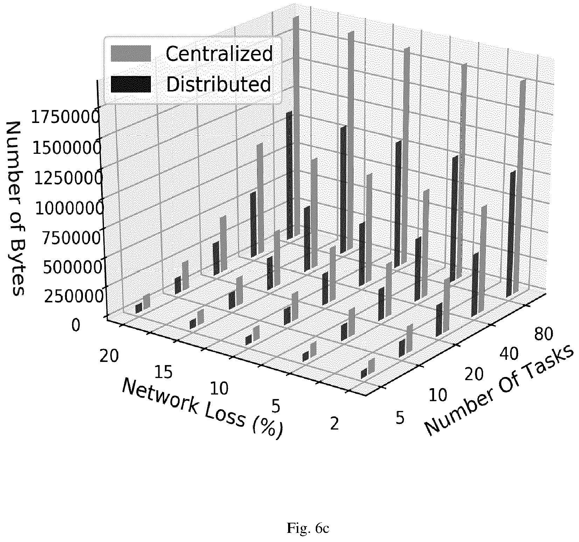

During the experiment, effect of increasing number of tasks on network traffic for distributed and centralized systems with respect to total number of bytes exchanged over network for different sets of task and different network loss conditions were assessed by keeping bandwidth fixed at 35 kbps and number of robots being 3 only. It was observed that as the number of tasks increases exponentially (i.e. 5, 10, 20, 40, 80) so does the number of related queries to the knowledge bases of each robots and this results into more network traffic. Results indicated that the distributed system performs better for each task-set. Same comparison were done for other three bandwidths and similar trend is observed. This is depicted in FIG. 6c.

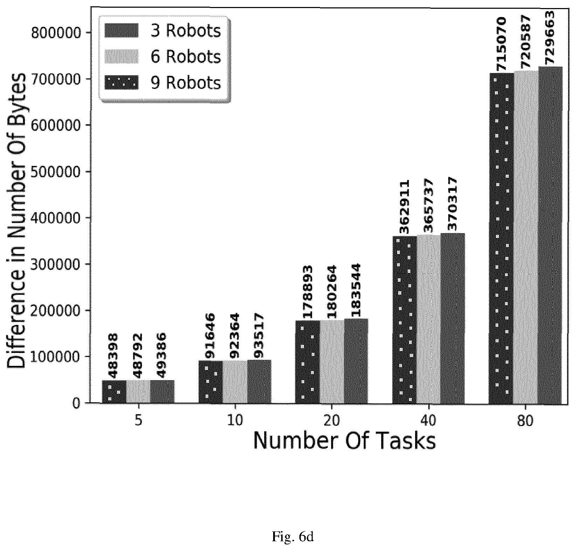

Further during the experiment, trend of difference in number of bytes exchanged over network between centralized and distributed system by varying the number of tasks was checked. Results indicated that for a given network condition (35 Kbps bandwidth and 2% loss), bytes exchanged for the centralized system grows exponentially for increasing number of tasks i.e. as more tasks are coming in, the centralized system consumes more network bytes compared to the distributed system. The reason is: if each task generates Q queries and of them say 2 queries (on average) are resolved internally (in case of the distributed system) then for N tasks, there are N*(Q-2) queries are going in network. But for the centralized system, N*Q queries are going in network. This difference (2N) is increasing as N increases, resulting in an increase in difference in network traffic. On the other hand, for a given set of tasks, there is not much change in network traffic even if the number of robots is increased. This is depicted in FIG. 6d.

Further, task completion time for the distributed and the centralized networks, for different sets of task and different network loss conditions, for 35 kbps and 3 robots scenario was checked. Results indicate that the distributed system outperforms the centralized system. As the network loss increases, task completion time also increases for a given task set. As the network goes from low to high bandwidth, corresponding decrease in task completion time was observed. It was also observed that for all sets of robots, the difference in task completion time is not huge for smaller number of tasks; but as the number of tasks increases the difference in corresponding task completion time increases, which means that for a larger number of tasks performance of the centralized system worsens.

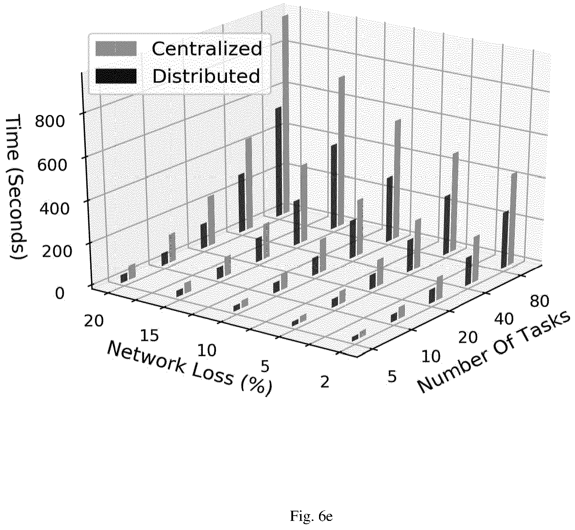

A comparison of task completion time between different sets of robots (i.e. 3, 6, 9) for different number of tasks under different network loss conditions in distributed system for 35 Kbps network bandwidth was performed. This is depicted in FIG. 6e. Same comparison for three other bandwidths also were performed. It was observed that for all the four bandwidth cases, as the number of tasks increases so does the task completion time. But if number of robots is increased for a given set of task then task completion time reduces. For a given number of tasks, if the network loss increase then task completion time also increases slowly.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of collaboration between robots in a robotic environment. The embodiment, thus provides a distributed semantic knowledge base, wherein the semantic knowledge base is distributed among multiple robots that form a robotic group. Moreover, the embodiments herein further provides a mechanism of the robots exchanging information for the purpose of executing a task.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) for robotic task execution, comprising:
fetching (302) at least one task assigned to a robotic group, by at least two robots that form the robotic group and read data including network internet protocol (IP), file paths, an initial location of the at least two robots in a map, wherein the robotic group comprises the at least two robots collaborating for executing the at least one task assigned to the robotic group; and
processing the fetched at least one task by each of the at least two robots, comprising:
querying (304) an own semantic knowledge database to gather semantic information pertaining to a plurality of task specific parameters required for executing the at least one task, wherein the semantic knowledge base is dynamically updated based on one or more real-time data collected by at least one of the at least two robots, wherein the plurality of task specific parameters corresponding to the at least one task of picking up an object including an object specific data, a location specific data, a capability specific data, wherein the capability specific data corresponds to capabilities required by the at least two robots to execute the at least one task such as presence of a gripper cup, and capability to lift the object, wherein the semantic knowledge database comprising information pertaining to the plurality of task specific parameters that are distributed among the at least two robots that form the robotic group such that an object database storing the object specific data is stored in one robot among the at least two robots, a location database storing the location specific data in another robot other than the robot storing the object specific data, and a capability database storing the capability specific data;
querying (306) the semantic knowledge database of at least one other robot of the at least two robots, if the semantic information pertaining to the plurality of task specific parameters are not available in the own semantic knowledge database;
processing (308) semantic information on the plurality of task specific parameters, comprising identifying at least one of the at least two robots as a target robot for executing the at least one task assigned to the robotic group, wherein the target robot satisfies criteria in terms of a) capability to handle the at least one task, and b) a cost factor, wherein the identifying the at least one target robot comprising:
determining (402), based on the gathered semantic information, capabilities required for a robot to execute the at least one task;
identifying (404) all robots of the at least two robots with matching capabilities, by comparing the determined capabilities with capabilities of the at least two robots;
determining (406) the cost factor for each robot identified as having the matching capabilities, wherein the cost factor of a robot represents cost involved in using the robot for executing the task; and
selecting (408) a robot with minimum cost factor, from the at least two robots with matching capabilities, as the target robot; and
executing (310) the at least one task using the at least one target robot.

2. The method as claimed in claim 1, wherein the cost factor of the robot for executing the at least one task is determined based on a plurality of parameters comprising type of task, type of object involved in the task, type of action to be performed on the object, type of material the object is made of, distance between location of the robot and location of the object, and battery consumption.

3. A robotic group (100) for task execution, comprising:
at least two robots (101) including a first robot (101), wherein the at least two robots (101) collaborate to execute a task assigned to the robotic group by:
collecting (302) the task assigned to the robotic group and read data including network internet protocol (IP), file paths, an initial location of the at least two robots in a map; and
processing the collected task by each of the at least two robots, comprising:
trigger a self query (304) to query an own semantic knowledge database to gather a plurality of task specific parameters required for executing the task, wherein the robotic group dynamically updates the semantic knowledge base based on one or more real-time data collected by at least one of the at least two robots that form the robotic group, wherein the plurality of task specific parameters corresponding to the at least one task of picking up an object including an object specific data, a location specific data, a capability specific data, wherein the capability specific data corresponds to capabilities required by the at least two robots to execute the at least one task such as presence of a gripper cup, and capability to lift the object, wherein the semantic knowledge database comprising information pertaining to the plurality of task specific parameters that are distributed among the at least two robots that form the robotic group such that an object database storing the object specific data is stored in one robot among the at least two robots, a location database storing the location specific data in another robot other than the robot storing the object specific data, and a capability database storing the capability specific data;
querying (306) the semantic knowledge database of at least one other robot of the at least two robots, if the task specific parameters are not available in the own semantic knowledge database;
processing (308) semantic information on the plurality of task specific parameters, comprising identifying at least one of the at least two robots as a target robot for executing the task assigned to the robotic group, wherein the target robot satisfies criteria in terms of a) capability to handle the at least one task, and b) a cost factor, wherein the robotic group identifies the at least one target robot by:
determining (402), based on the gathered semantic information, capabilities required for a robot to execute the at least one task;
identifying (404) all robots of the at least two robots with matching capabilities, by comparing the determined capabilities with capabilities of the at least two robots;
determining (406) the cost factor for each robot identified as having the matching capabilities, wherein the cost factor of a robot represents cost involved in using the robot for executing the task; and
selecting (408) a robot with minimum cost factor, from the at least two robots with matching capabilities, as the target robot; and
executing (310) the task using the at least one target robot.

4. The robotic group (100) as claimed in claim 3, wherein the robotic group determines the cost factor of each of the robots for the task, based on a plurality of parameters comprising type of task, type of object involved in the task, type of action to be performed on the object, type of material the object is made of, distance between location of the robot and location of the object, and battery consumption.

## Patentansprüche

1. Prozessorimplementiertes Verfahren (300) zur Roboteraufgabenausführung, umfassend:
Abrufen (302) mindestens einer Aufgabe, die einer Robotergruppe zugewiesen ist, durch mindestens zwei Roboter, die die Robotergruppe bilden und Daten einschließlich Netzwerkinternetprotokoll (IP), Dateipfade, einen Anfangsort der mindestens zwei Roboter in einer Karte lesen, wobei die Robotergruppe die mindestens zwei Roboter umfasst, die zum Ausführen der mindestens einen Aufgabe, die der Robotergruppe zugewiesen ist, zusammenarbeiten; und
Verarbeiten der abgerufenen mindestens einen Aufgabe durch jeden der mindestens zwei Roboter, umfassend:
Abfragen (304) einer eigenen semantischen Wissensdatenbank, um semantische Informationen zu sammeln, die sich auf eine Mehrzahl von aufgabenspezifischen Parametern beziehen, die zum Ausführen der mindestens einen Aufgabe erforderlich sind, wobei die semantische Wissensdatenbank basierend auf einem oder mehreren Echtzeitdaten, die von mindestens einem der mindestens zwei Roboter gesammelt werden, dynamisch aktualisiert wird, wobei die Mehrzahl von aufgabenspezifischen Parametern der mindestens einen Aufgabe des Aufnehmens eines Objekts entspricht, einschließlich objektspezifischer Daten, ortsspezifischer Daten, fähigkeitsspezifischer Daten, wobei die fähigkeitsspezifischen Daten Fähigkeiten entsprechen, die von den mindestens zwei Robotern zum Ausführen der mindestens einen Aufgabe erforderlich sind, wie etwa Vorhandensein eines Greiferbechers, und Fähigkeit zum Anheben des Objekts, wobei die semantische Wissensdatenbank Informationen umfasst, die sich auf die Mehrzahl von aufgabenspezifischen Parametern beziehen, die unter den mindestens zwei Robotern, die die Robotergruppe bilden, verteilt sind, sodass eine Objektdatenbank, die die objektspezifischen Daten speichert, in einem Roboter unter den mindestens zwei Robotern gespeichert ist, eine Ortsdatenbank, die die ortsspezifischen Daten in einem anderen Roboter speichert, der nicht der Roboter ist, der die objektspezifischen Daten speichert, und eine Fähigkeitsdatenbank, die die fähigkeitsspezifischen Daten speichert;
Abfragen (306) der semantischen Wissensdatenbank mindestens eines anderen Roboters der mindestens zwei Roboter, wenn die semantischen Informationen, die sich auf die Mehrzahl von aufgabenspezifischen Parametern beziehen, nicht in der eigenen semantischen Wissensdatenbank verfügbar sind;
Verarbeiten (308) semantischer Informationen über die Mehrzahl von aufgabenspezifischen Parametern, umfassend das Identifizieren mindestens eines der mindestens zwei Roboter als Zielroboter zum Ausführen der mindestens einen Aufgabe, die der Robotergruppe zugewiesen ist, wobei der Zielroboter Kriterien in Bezug auf a) Fähigkeit zum Handhaben der mindestens einen Aufgabe und b) einen Kostenfaktor erfüllt, wobei das Identifizieren des mindestens einen Zielroboters umfasst:
Bestimmen (402), basierend auf den gesammelten semantischen Informationen, von Fähigkeiten, die für einen Roboter zum Ausführen der mindestens einen Aufgabe erforderlich sind;
Identifizieren (404) aller Roboter der mindestens zwei Roboter mit übereinstimmenden Fähigkeiten durch Vergleichen der bestimmten Fähigkeiten mit Fähigkeiten der mindestens zwei Roboter;
Bestimmen (406) des Kostenfaktors für jeden Roboter, der als die übereinstimmenden Fähigkeiten aufweisend identifiziert wurde, wobei der Kostenfaktor eines Roboters Kosten repräsentiert, die beim Verwenden des Roboters zum Ausführen der Aufgabe involviert sind; und
Auswählen (408) eines Roboters mit minimalem Kostenfaktor aus den mindestens zwei Robotern mit übereinstimmenden Fähigkeiten als Zielroboter; und
Ausführen (310) der mindestens einen Aufgabe unter Verwendung des mindestens einen Zielroboters.

2. Verfahren nach Anspruch 1, wobei der Kostenfaktor des Roboters zum Ausführen der mindestens einen Aufgabe basierend auf einer Mehrzahl von Parametern bestimmt wird, die Folgendes umfassen: Art der Aufgabe, Art des an der Aufgabe beteiligten Objekts, Art der an dem Objekt durchzuführenden Aktion, Art des Materials, aus dem das Objekt hergestellt ist, Abstand zwischen Ort des Roboters und Ort des Objekts und Batterieverbrauch.

3. Robotergruppe (100) zur Aufgabenausführung, umfassend:
mindestens zwei Roboter (101), einschließlich eines ersten Roboters (101), wobei die mindestens zwei Roboter (101) zusammenarbeiten, um eine Aufgabe auszuführen, die der Robotergruppe zugewiesen ist, durch:
Sammeln (302) der Aufgabe, die der Robotergruppe zugewiesen ist, und Lesen von Daten einschließlich Netzwerkinternetprotokoll (IP), Dateipfade, einen Anfangsort der mindestens zwei Roboter in einer Karte; und
Verarbeiten der gesammelten Aufgabe durch jeden der mindestens zwei Roboter, umfassend:
Auslösen einer Selbstabfrage (304), um eine eigene semantische Wissensdatenbank abzufragen, um eine Mehrzahl von aufgabenspezifischen Parametern zu sammeln, die zum Ausführen der Aufgabe erforderlich sind, wobei die Robotergruppe die semantische Wissensdatenbank basierend auf einem oder mehreren Echtzeitdaten, die von mindestens einem der mindestens zwei Roboter, die die Robotergruppe bilden, gesammelt werden, dynamisch aktualisiert, wobei die Mehrzahl von aufgabenspezifischen Parametern der mindestens einen Aufgabe des Aufnehmens eines Objekts entspricht, einschließlich objektspezifischer Daten, ortsspezifischer Daten, fähigkeitsspezifischer Daten, wobei die fähigkeitsspezifischen Daten Fähigkeiten entsprechen, die von den mindestens zwei Robotern zum Ausführen der mindestens einen Aufgabe erforderlich sind, wie etwa Vorhandensein eines Greiferbechers, und Fähigkeit zum Anheben des Objekts, wobei die semantische Wissensdatenbank Informationen umfasst, die sich auf die Mehrzahl von aufgabenspezifischen Parametern beziehen, die unter den mindestens zwei Robotern, die die Robotergruppe bilden, verteilt sind, sodass eine Objektdatenbank, die die objektspezifischen Daten speichert, in einem Roboter unter den mindestens zwei Robotern gespeichert ist, eine Ortsdatenbank, die die ortsspezifischen Daten in einem anderen Roboter speichert, der nicht der Roboter ist, der die objektspezifischen Daten speichert, und eine Fähigkeitsdatenbank, die die fähigkeitsspezifischen Daten speichert;
Abfragen (306) der semantischen Wissensdatenbank mindestens eines anderen Roboters der mindestens zwei Roboter, wenn die aufgabenspezifischen Parameter nicht in der eigenen semantischen Wissensdatenbank verfügbar sind;
Verarbeiten (308) semantischer Informationen über die Mehrzahl von aufgabenspezifischen Parametern, umfassend das Identifizieren mindestens eines der mindestens zwei Roboter als Zielroboter zum Ausführen der Aufgabe, die der Robotergruppe zugewiesen ist, wobei der Zielroboter Kriterien in Bezug auf a) Fähigkeit zum Handhaben der mindestens einen Aufgabe und b) einen Kostenfaktor erfüllt, wobei die Robotergruppe den mindestens einen Zielroboter identifiziert durch:
Bestimmen (402), basierend auf den gesammelten semantischen Informationen, von Fähigkeiten, die für einen Roboter zum Ausführen der mindestens einen Aufgabe erforderlich sind;
Identifizieren (404) aller Roboter der mindestens zwei Roboter mit übereinstimmenden Fähigkeiten durch Vergleichen der bestimmten Fähigkeiten mit Fähigkeiten der mindestens zwei Roboter;
Bestimmen (406) des Kostenfaktors für jeden Roboter, der als die übereinstimmenden Fähigkeiten aufweisend identifiziert wurde, wobei der Kostenfaktor eines Roboters Kosten repräsentiert, die beim Verwenden des Roboters zum Ausführen der Aufgabe involviert sind; und
Auswählen (408) eines Roboters mit minimalem Kostenfaktor aus den mindestens zwei Robotern mit übereinstimmenden Fähigkeiten als Zielroboter; und
Ausführen (310) der Aufgabe unter Verwendung des mindestens einen Zielroboters.

4. Robotergruppe (100) nach Anspruch 3, wobei die Robotergruppe den Kostenfaktor jedes der Roboter für die Aufgabe basierend auf einer Mehrzahl von Parametern bestimmt, die Folgendes umfassen: Art der Aufgabe, Art des an der Aufgabe beteiligten Objekts, Art der an dem Objekt durchzuführenden Aktion, Art des Materials, aus dem das Objekt hergestellt ist, Abstand zwischen Ort des Roboters und Ort des Objekts und Batterieverbrauch.

## Revendications

1. Procédé mis en œuvre par processeur (300) pour l'exécution de tâches robotiques, comprenant :
la récupération (302) d'au moins une tâche attribuée à un , par au moins deux robots qui forment le groupe robotique et lisent des données incluant un protocole Internet (IP) de réseau, des chemins de fichiers, un emplacement initial des au moins deux robots dans une carte, dans lequel le groupe robotique comprend les au moins deux robots collaborant pour exécuter l'au moins une tâche attribuée au groupe robotique ; et
le traitement de l'au moins une tâche récupérée par chacun des au moins deux robots, comprenant :
l'interrogation (304) d'une propre base de données de connaissances sémantiques pour collecter des informations sémantiques se rapportant à une pluralité de paramètres spécifiques à une tâche requis pour exécuter l'au moins une tâche, dans lequel la base de connaissances sémantiques est mise à jour dynamiquement sur la base d'une ou plusieurs données en temps réel collectées par au moins l'un des au moins deux robots, dans lequel la pluralité de paramètres spécifiques à une tâche correspond à l'au moins une tâche de récupération d'un objet incluant des données spécifiques à un objet, des données spécifiques à un emplacement, des données spécifiques à une capacité, dans lequel les données spécifiques à une capacité correspondent à des capacités requises par les au moins deux robots pour exécuter l'au moins une tâche telles que la présence d'une coupelle de préhension, et la capacité de lever l'objet, dans lequel la base de données de connaissances sémantiques comprend des informations se rapportant à la pluralité de paramètres spécifiques à une tâche qui sont distribués parmi les au moins deux robots qui forment le groupe robotique de sorte qu'une base de données d'objets stockant les données spécifiques à un objet est stockée dans un robot parmi les au moins deux robots, une base de données d'emplacements stockant les données spécifiques à un emplacement dans un autre robot autre que le robot stockant les données spécifiques à un objet, et une base de données de capacités stockant les données spécifiques à une capacité ;
l'interrogation (306) de la base de données de connaissances sémantiques d'au moins un autre robot des au moins deux robots, si les informations sémantiques se rapportant à la pluralité de paramètres spécifiques à une tâche ne sont pas disponibles dans la propre base de données de connaissances sémantiques ;
le traitement (308) d'informations sémantiques sur la pluralité de paramètres spécifiques à une tâche, comprenant l'identification d'au moins l'un des au moins deux robots en tant que robot cible pour exécuter l'au moins une tâche attribuée au groupe robotique, dans lequel le robot cible satisfait des critères en termes de a) capacité à gérer l'au moins une tâche, et b) un facteur de coût, dans lequel l'identification de l'au moins un robot cible comprend :
la détermination (402), sur la base des informations sémantiques rassemblées, de capacités requises pour qu'un robot exécute l'au moins une tâche ;
l'identification (404) de tous les robots des au moins deux robots avec des capacités correspondantes, en comparant les capacités déterminées avec des capacités des au moins deux robots ;
la détermination (406) du facteur de coût pour chaque robot identifié comme ayant les capacités correspondantes, dans lequel le facteur de coût d'un robot représente un coût impliqué dans l'utilisation du robot pour exécuter la tâche ; et
la sélection (408) d'un robot avec un facteur de coût minimum, parmi les au moins deux robots avec des capacités correspondantes, en tant que robot cible ; et
l'exécution (310) de l'au moins une tâche en utilisant l'au moins un robot cible.

2. Procédé selon la revendication 1, dans lequel le facteur de coût du robot pour exécuter l'au moins une tâche est déterminé sur la base d'une pluralité de paramètres comprenant un type de tâche, un type d'objet impliqué dans la tâche, un type d'action à effectuer sur l'objet, un type de matériau dont l'objet est constitué, une distance entre un emplacement du robot et un emplacement de l'objet, et une consommation de batterie.

3. Groupe robotique (100) pour l'exécution de tâches, comprenant :
au moins deux robots (101) incluant un premier robot (101), dans lequel les au moins deux robots (101) collaborent pour exécuter une tâche attribuée au groupe robotique par :
la collecte (302) de la tâche attribuée au groupe robotique et de données de lecture incluant un protocole Internet (IP) de réseau, des chemins de fichiers, un emplacement initial des au moins deux robots dans une carte ; et
le traitement de la tâche collectée par chacun des au moins deux robots, comprenant :
le déclenchement d'une auto-interrogation (304) pour interroger une propre base de données de connaissances sémantiques pour rassembler une pluralité de paramètres spécifiques à une tâche requis pour exécuter la tâche, dans lequel le groupe robotique met à jour dynamiquement la base de connaissances sémantiques sur la base d'une ou plusieurs données en temps réel collectées par au moins l'un des au moins deux robots qui forment le groupe robotique, dans lequel la pluralité de paramètres spécifiques à une tâche correspond à l'au moins une tâche de prélèvement d'un objet incluant des données spécifiques à un objet, des données spécifiques à un emplacement, des données spécifiques à une capacité, dans lequel les données spécifiques à une capacité correspondent à des capacités requises par les au moins deux robots pour exécuter l'au moins une tâche telle que la présence d'une coupelle de préhension, et une capacité pour soulever l'objet, dans lequel la base de données de connaissances sémantiques comprend des informations se rapportant à la pluralité de paramètres spécifiques à une tâche qui sont distribués parmi les au moins deux robots qui forment le groupe robotique de sorte qu'une base de données d'objets stockant les données spécifiques à un objet est stockée dans un robot parmi les au moins deux robots, une base de données d'emplacements stockant les données spécifiques à un emplacement dans un autre robot autre que le robot stockant les données spécifiques à un objet, et une base de données de capacités stockant les données spécifiques à une capacité ;
l'interrogation (306) de la base de données de connaissances sémantiques d'au moins un autre robot des au moins deux robots, si les paramètres spécifiques à une tâche ne sont pas disponibles dans la propre base de données de connaissances sémantiques ;
le traitement (308) d'informations sémantiques sur la pluralité de paramètres spécifiques à une tâche, comprenant l'identification d'au moins l'un des au moins deux robots en tant que robot cible pour exécuter la tâche attribuée au groupe robotique, dans lequel le robot cible satisfait des critères en termes de a) capacité à gérer l'au moins une tâche, et b) un facteur de coût, dans lequel le groupe robotique identifie l'au moins un robot cible par :
la détermination (402), sur la base des informations sémantiques rassemblées, de capacités requises pour qu'un robot exécute l'au moins une tâche ;
l'identification (404) de tous les robots des au moins deux robots avec des capacités correspondantes, en comparant les capacités déterminées avec des capacités des au moins deux robots;
la détermination (406) du facteur de coût pour chaque robot identifié comme ayant les capacités correspondantes, dans lequel le facteur de coût d'un robot représente un coût impliqué dans l'utilisation du robot pour exécuter la tâche ; et
la sélection (408) d'un robot avec un facteur de coût minimum, parmi les au moins deux robots avec des capacités correspondantes, en tant que robot cible ; et
l'exécution (310) de la tâche en utilisant l'au moins un robot cible.

4. Groupe robotique (100) selon la revendication 3, dans lequel le groupe robotique détermine le facteur de coût de chacun des robots pour la tâche, sur la base d'une pluralité de paramètres comprenant un type de tâche, un type d'objet impliqué dans la tâche, un type d'action à effectuer sur l'objet, un type de matériau dont l'objet est constitué, une distance entre un emplacement du robot et un emplacement de l'objet, et une consommation de batterie.
